# EUROPEAN PATENT APPLICATION

(11) **EP 2 741 003 A2**
(43) Date of publication of application: **11.06.2014**
(21) Application number: 13194038.9
(22) Date of filing: 22.11.2013
(51) Int. Cl.: F23R 3/00, F23N 5/00

(54) **Controlling combustion system with fuel chemical induction time**

(30) Priority: 07.12.2012 US 201213708365
(71) Applicant: General Electric Company, Schenectady, New York 12345 (US)
(72) Inventor: Washam, Roy Marshall, Greenville, SC South Carolina 29615 (US)
(74) Representative: Cleary, Fidelma

(57) **Abstract**

A gas turbine system (100) includes a gas turbine (130) including a combustor (132) for combusting a fuel and a control assembly (110) configured to control at least one of a fuel system (140) and the combusting of the combustor (132) based on providing values corresponding to at least one of fuel characteristics and combustor characteristics to a fuel induction time transfer function.

## Description

### BACKGROUND OF THE INVENTION

The subject matter disclosed herein relates to controlling combustion systems based on a fuel chemical induction time. In particular, the subject matter relates to determining characteristics of a combustion system, determining a fuel chemical induction time based on the characteristics and providing the fuel chemical induction time to a model for controlling the combustion system.

Gas turbines generate power by providing a fluid, such as air or a other gas, into an intake, heating the fluid with a combustor, and driving the heated fluid through a turbine stage. The turbine stage includes blades or buckets fixed to a shaft and configured to rotate the shaft as the heated fluid is directed to the blades or buckets, turning the shaft to generate power. Generated power levels, gas and exhaust output levels, and other characteristics of the gas turbine may be controlled by controlling the combustion of a fuel to heat the fluid. The combustion may be controlled by controlling fuel characteristics, such as a ratio of fuel to oxidant that is combusted, or by controlling characteristics of the combustor, such as and inlet width that supplies the mixed fuel to the combustion chamber.

Gas turbine control models analyze characteristics of the gas turbine and control the generation of control signals to control settings of the combustor based on measurements, such as fuel measurements and combustion chamber temperature or pressure measurements. Since the combustion process occurs relatively quickly (e.g., within a time-span of milliseconds) while changes to the settings of the gas turbine may take a relatively long time (e.g., between .1 second and 1.5 seconds), the gas turbine control models attempt to predict future characteristics of the combustor and adjust settings of the gas turbine based on the predicted future characteristics to maintain combustion at predetermined levels.

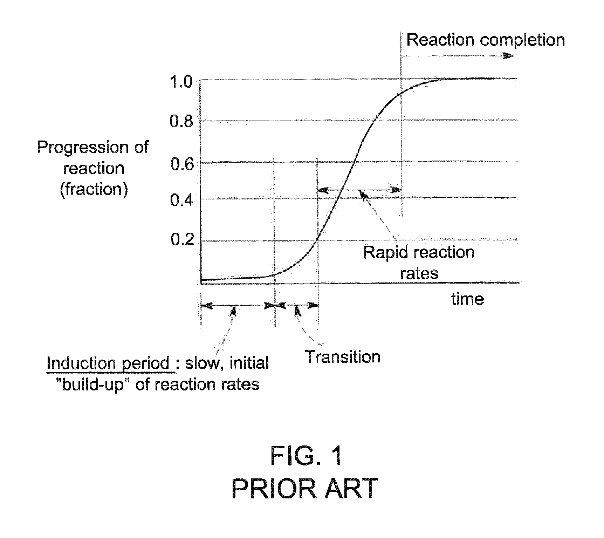

A chemical fuel induction time is one parameter that affects a combustion process in a gas turbine. FIG. 1 illustrates a graphical representation of a chemical fuel induction time, which may also be referred to in the present specification as "fuel induction time" or just "induction time." The combustion of a fuel includes an induction period, a transition period, a rapid reaction period, and a completion period. In the induction period, the chemicals in the fuel begin to react, and the reaction slowly increases. In the transition period, the reaction rate begins to increase, and in the rapid reaction period, the chemical reactions generate sufficient energy to cause more chemical reactions, which results in a rapid reaction. For example, in FIG. 1, the rapid reaction period corresponds to a period in which approximately .7, or 70% of the fuel is combusted. In the reaction completion stage, the chemical reaction rate decreases as all of the fuel is combusted.

The induction period may be short, such as within a time period corresponding to microseconds. The entire combustion process may take only milliseconds. Although the chemical fuel induction time affects combustion, it may be difficult to measure by experimentation, since its duration is so short.

### BRIEF DESCRIPTION OF THE INVENTION

According to one aspect of the invention, a gas turbine system includes a gas turbine including a combustor for combusting a fuel and a control assembly configured to control at least one of a fuel system and the combustor based on providing at least one of fuel characteristic values and combustor characteristic values to a fuel induction time transfer function.

According to another aspect of the invention, a gas turbine control assembly includes memory having stored therein an induction time transfer function and a processing circuit. The processing circuit is configured to generate an induction time value based on providing at least one of fuel characteristic values and combustor characteristic values to the induction time transfer function, and to generate gas turbine control signals based on the induction time value.

According to yet another aspect of the invention, a method for controlling a gas turbine configured to combust a fuel includes providing to an induction time transfer function values corresponding to at least one of fuel characteristics and combustor characteristics. The method also includes controlling the combustor of the gas turbine based on a fuel induction time value resulting from the providing to the induction time transfer function the values corresponding to at least one of fuel characteristics and combustor characteristics.

These and other advantages and features will become more apparent from the following description taken in conjunction with the drawings.

### BRIEF DESCRIPTION OF THE DRAWING

The subject matter, which is regarded as the invention, is particularly pointed out and distinctly claimed in the claims at the conclusion of the specification. The foregoing and other features, and advantages of the invention are apparent from the following detailed description taken in conjunction with the accompanying drawings in which:
FIG. 1 is a chart illustrating a fuel induction time of the prior art;
FIG. 2 is a block diagram of a gas turbine system according to one embodiment of the invention; and
FIG. 3 is a block diagram of a system for controlling a gas turbine according to one embodiment.

The detailed description explains embodiments of the invention, together with advantages and features, by way of example with reference to the drawings.

### DETAILED DESCRIPTION OF THE INVENTION

Embodiments of the present invention relate to controlling a gas turbine, and in particular controlling the combustion of fuel in the combustion system of the gas turbine, using a fuel induction time as a control parameter. The fuel induction time takes into account a number of different parameters, including inherent fuel characteristics, such as the combustibility of a gas, design characteristics of the combustion system, such as configurations of combustors, changeable fuel characteristics, such as mixing ratios of a fuel to an oxidant, and changeable combustion system characteristics, such as varying fuel loading and distribution to a combustion system, pressure, and temperature in a combustion chamber. According to embodiments of the present disclosure, controlling a gas turbine system, and in particular a fuel system and a combustion system, based on the fuel induction time, may provide improved control of the gas turbine system.

In embodiments of the present disclosure, the chemical fuel induction time may be calculated or estimated and used to control the combustion process of a gas turbine.

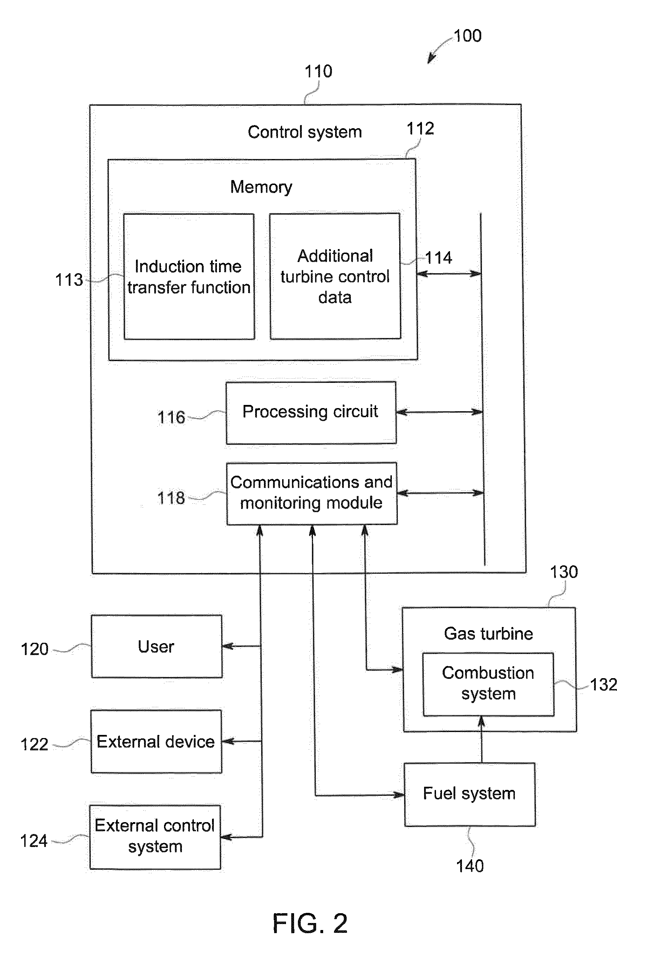

FIG. 2 illustrates a gas turbine system 100 according to an embodiment of the invention. The gas turbine system 100 includes a control system 110, a gas turbine 130 and a fuel system 140. The control system 110 includes memory 112, a processing circuit 116 and a communications and monitoring module 118. The memory 112 stores an induction time transfer function 113 and any other additional data 114 for controlling operation of the gas turbine 130. The other additional data includes, for example, pre-defined ranges of operation of the fuel system, characteristics of the fuel, pre-defined ranges of operation of the combustion system 132, design specifications of the combustion system 132, stored measured characteristics and parameters, a gas turbine control model for generating control signals to control settings of the gas turbine 130 or any other data.

The processing circuit 116 includes, for example, one or more processors having one or more processing cores, data storage, operational logic and any other circuitry for processing data from memory 112 and the communications and monitoring module 118.

The communications and monitoring module 118 includes inputs and outputs (I/O), such as serial, parallel, synchronous, or asynchronous I/O, wired or wireless transmitters, receivers, or ports and any other circuitry necessary to transmit and receive data to and from devices external to the control system 110. The gas turbine 130 includes an intake stage, combustion stage including the combustion system 132, which may be made up of multiple combustors arranged around the turbine 130 in a predetermined configuration, to combust a fuel to heat a fluid flowing through the gas turbine 130. The gas turbine 130 also includes a turbine stage, although only the combustion system 132 is illustrated in FIG. 2 for purposes of describing embodiments of the invention. The fuel system 140 provides a fuel to the combustion system 132 and may mix a fuel with an oxidant to change combustion characteristics of the fuel combusted by the combustion system 132.

Although one example of a control system 110 is illustrated in FIG. 2 for purposes of description, embodiments of the invention are not limited to the configuration illustrated in FIG. 2. In some embodiments, additional elements, modules, and functions are added to the control system 110 to provide additional functionality. In one embodiment, each of the memory 112, processing circuit 116 and communications and monitoring module 118 is housed within a same device, such as a same computer, housing or mainframe. In other embodiments, the different components of the control system 110 may correspond to separate devices housed in separate housings or computers and connected remotely, either wired or wirelessly, to be in communication with each other to form the control system 110.

In embodiments of the present invention, the induction time transfer function 113 is used to control operation of the gas turbine 130. In particular, the induction time transfer function 113 may be used to calculate an induction time of the combustion system 132 and to control settings of the combustion system 132 and the fuel system 140.

In further detail, in one embodiment the induction time transfer function 113 is generated based on pre-defined data corresponding to the gas turbine 130 and the fuel system 140. In one embodiment, the pre-defined data includes ranges of properties including physical properties of the gas turbine 130 and operating ranges of combustion system 132 properties and fuel characteristics. The pre-defined data may be stored in the memory 112. In one embodiment, the pre-defined data is provided from external sources. The external sources include one or more of a user 120, such as via a keyboard or other user interface and an external device 122, such as a data storage device, disk, computer, or other external device. The external sources may also include an external control system 124 including one or more computers, networks, databases and other data processing, storage and communications devices to define operating conditions of the gas turbine 130 and the fuel system 140.

Examples of operating conditions that are pre-defined include a range of compressor discharge temperatures (or combustor inlet temperatures) in which the combustor is designed to operate, a range of compressor discharge pressures (or combustor inlet pressures), a range of humidity of air outside and inside the gas turbine 130 and fuel system 140, an equivalence ratio of fuel to oxidant (or a ratio of fuel to air, fuel to oxygen or fuel to a predetermined gas), a range of concentrations of hydrogen (H₂) in a fuel, a range of concentrations of inerts, such as nitrogen, steam and carbon dioxide (CO₂), in the fuel, and a range of CxHy compounds in the fuel, where x and y represent a number of molecules of carbon and hydrogen, respectively in the molecule of the compound.

Other pre-defined characteristics include configurations of elements, such as combustors, in the combustion system 132 with respect to each other. In some embodiments, chamber shape and volume, nozzle or inlet shape or opening size are among the pre-defined characteristics. Other predefined characteristics include chemical properties, such as combustibility, of fuel or oxidants. Other pre-defined characteristics include fuel loading and distribution to the combustion system 132. Although some examples of pre-defined characteristics have been provided, embodiments of the invention encompass additional pre-defined characteristics and may omit some of the listed characteristics.

In another embodiment, the induction time transfer function 113 is generated externally of the control system 110 and provided to the control system 110 via one of the user 120, external device 122 and external control system 124.

During operation of the gas turbine 130, measurements from the gas turbine 130, the combustion system 132 and the fuel system 140 are provided to the communications and monitoring module 118 of the control system 110. The processing circuit 116 plugs in the appropriate measurements into the induction time transfer function 113 and generates control signals based on a chemical fuel induction time output by the induction time transfer function 113. The control module 110 then transmits the control signals to the gas turbine 130 and the fuel system 140 to adjust operating settings, such as fuel/oxidant ratios, fuel inlet diameters or openings, pressure levels or any other settings. In one embodiment for example, the chemical fuel induction time is provided to a gas turbine control model stored in memory 112 and configured to control the processing circuit 116 to generate the gas turbine control signals.

The chemical fuel induction time may be defined according to a user's preference, design considerations or by any other means. A different standard may be used to define an induction time for different performance parameters of the gas turbine system 100. For example, referring to FIG. 1, in one embodiment the induction time is defined as a point at which .02, or 2% of the reaction has taken place. In another embodiment, the induction time is defined as a time at which the reaction is accelerating at a predetermined rate, or a time at which the change in reaction rate has a predetermined slope. In some embodiments, the induction time is defined as the sum of the induction period and the transition period, illustrated in FIG. 1. For example, transfer functions describing flame stability, flame-holding and carbon monoxide emissions may define the induction time as the induction period of FIG. 1 plus the transition period of FIG. 1.

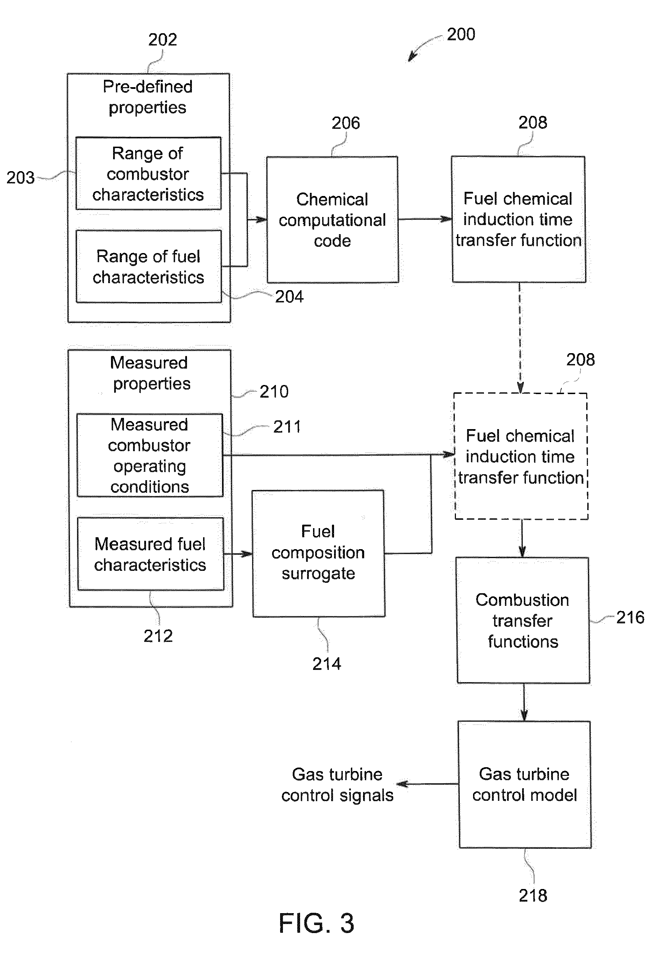

FIG. 3 illustrates a block diagram of a control system 200 according to one embodiment. The blocks of FIG. 3 may correspond to one or more devices, to software modules executed by a processing circuit and to hardware modules of a system.

In block 202, pre-defined properties are provided 202. The pre-defined properties include ranges of combustor characteristics 203 and ranges of fuel characteristics. Examples of combustor characteristics include operating conditions such as a range of compressor discharge temperatures in which the combustor is designed to operate, a range of compressor discharge pressures and a range of humidity of air outside or inside a combustor. Examples of combustor characteristics also include physical characteristics of the combustor such as physical dimensions of a combustion cavity, a nozzle or an inlet of a combustor, or any other physical dimensions or characteristics. Examples of fuel characteristics include fuel volume, fuel pressure, fuel combustibility, an equivalence ratio of fuel to oxidant, a range of concentrations of hydrogen (H₂) in a fuel, a range of concentrations of inerts, such as nitrogen, steam and carbon dioxide (CO₂), in the fuel, and a range of CxHy compounds in the fuel, where x and y represent a number of molecules of carbon and hydrogen, respectively in the molecule of the compound, and any other fuel characteristics. While examples of pre-defined properties 202 have been provided for purposes of description, embodiments of the invention are not limited to the disclosed examples.

The pre-defined properties 202 are provided to a chemical computational code 206. The chemical computational code 206 calculates a reaction over time based on the pre-defined characteristics. The chemical computational code 206 outputs a range of combustion times, including chemical fuel induction times, based on the pre-defined properties 202. One or more induction times from among the range of chemical fuel induction times is then used to calculate a fuel chemical induction time transfer function 208. In one embodiment, the chemical computational code 206 outputs a range of chemical reaction curves, or digital data corresponding to the curves, similar to the curve illustrated in FIG. 1.

In one embodiment, the fuel chemical induction time transfer function 208 is an algebraic algorithm generated by setting each combustor characteristic and each fuel characteristic as a variable and mapping a correspondence between the characteristics and the values generated by the chemical computational code 206. For example, two components of the algorithm may be T_{cd}, representing compressor discharge temperature, or a temperature at the inlet of the compressor, and C_{CO2}, representing a concentration of carbon dioxide in the fuel. Since an increase in temperature tends to decrease an induction time and an increase in CO₂ tends to increase an induction time, a portion of the algorithm including Tcd and C_{CO2} may be represented as xC_{CO2}^{m} -yTcdⁿ, where x and y represent variables corresponding to the relationship of C_{CO2} and Tcd relative to a predetermined norm, m and n represent any predetermined constant exponential relationship the characteristics may have on the induction time, C_{CO2} is positive indicating that an increase in carbon dioxide contributes to an increase in induction time and Tcd is negative indicating that an increase in temperature contributes to a decrease in induction time.

The above segment of a fuel chemical induction time transfer function is provided by way of example only, and embodiments encompass fuel chemical induction time transfer functions having any number of variables having any algebraic relationships (including additive/subtractive, proportional, exponential, logarithmic, etc.) depending on the characteristics of the gas turbine system. The size and complexity of the fuel chemical induction time transfer function varies depending on the number of variables or characteristics in the algorithm, the shape of the combustion curve (such as the curve illustrated in FIG. 1) and the physical and chemical characteristics of the combustor and the fuel.

In block 210, one or more measured properties 210 are provided. The measured properties 210 include measured combustor operating conditions 211 and measured fuel characteristics 212. In one embodiment, a combustion control system monitors a combustor and fuel system at regular intervals and the measured properties 210 correspond to the measured data. As discussed above, some examples of combustor operating conditions include a compressor discharge temperature, a compressor discharge pressure and humidity levels outside or inside the combustor. Similarly, examples of measured fuel characteristics include an equivalence ratio of fuel to oxidant, a concentration of hydrogen (H₂) in a fuel, a concentration of inerts, such as nitrogen, steam and carbon dioxide (CO₂), in the fuel, and a concentration of CxHy compounds in the fuel, where x and y represent a number of molecules of carbon and hydrogen, respectively in the molecule of the compound. These examples of measured combustor operating conditions and measured fuel characteristics are provided by way of example, and embodiments of the invention are not limited to the disclosed operating conditions and characteristics.

In one embodiment, a fuel composition surrogate 214 is provided based on the measured fuel characteristics 212, such as specific gravity. For example, the fuel composition surrogate may be include a value or algorithm that represents chemical composition of the fuel, or that correlates an estimated chemical composition of the fuel with one or more known parameters or fuel characteristics. In other words, the fuel composition surrogate 214 allows for identifying fuel characteristics, such as chemical composition, within predefined constraints, without the need to specifically measure the fuel characteristics.

The measured combustor operating conditions 211 and measured fuel characteristics 212 are provided to the fuel chemical induction time transfer function 208 (represented by dashed lines in FIG. 3), and an induction time value is generated based on the measured properties 210. In embodiments of the disclosure, the induction time value is used to generate control signals to control a gas turbine system, such as a fuel system and a combustor of a gas turbine.

In one embodiment, the calculated fuel induction time from the fuel chemical induction time transfer function is used by a gas turbine control model to generate gas turbine control signal. As illustrated in FIG. 3, in one embodiment the induction time value is provided to combustion transfer functions 216. The fuel chemical induction time transfer function 208 may be included as one of the combustion transfer functions 216 and it may provide information to form the basis of one or more additional combustion transfer functions or algorithms. In one embodiment, the combustion transfer functions 216 include transfer functions corresponding to multiple measurable, calculable or estimable characteristics. Some examples of measureable, calculable or estimable characteristics include the previously-described measured properties 210, as well as blowout likelihood, cold-tone dynamics, hot-tone dynamics, carbon monoxide (CO) emissions, and nitrogen oxide (NOx) emissions, where x represents a number of oxygen atoms in the molecule. The equations, transfer functions and values of the combustion transfer functions 216 are then provided to the gas turbine control model 218 to generate gas turbine control signals.

While FIG. 3 is illustrated as functional blocks, the characteristics and functions of the blocks may be implemented in a turbine system, such as the turbine system 100 of FIG. 2. For example, the pre-defined properties, measured properties 210, chemical computational code 206, fuel chemical induction time transfer function 208, fuel composition surrogate 214, combustion transfer functions 216 and gas turbine control model 218 may all include software program elements stored in memory 112 and executed by the processing circuit 116 to generate control signals to operate the control system 110 and control the gas turbine 130 and the fuel system 140. In addition, the measured properties 210 may be measured by sensors and other detection apparatuses that monitor characteristics of the gas turbine 130 and the fuel system 140 and provide the measured data to the communications and monitoring module 118 of the control system 110. The processing circuit 116 may analyze the measured data, store the measured data in the memory 112, and apply the measured data to the induction time transfer function 113, additional turbine control data 114, such as the combustion transfer functions 216 and gas turbine control model 218.

In one embodiment, the processing circuit 116 executes the gas turbine control model 218 to generate the gas turbine control signals, and transmits the gas turbine control signals to the gas turbine 130 and fuel system 140 via the communications and monitoring module 118.

In one embodiment of the invention, the gas turbine control signals control fuel properties, such as a chemical composition of a fuel or fuel/oxidant ratio, or combustor properties, such as a flow rate of a fuel into the combustor, an inlet opening into the combustor, a pressure within the combustor or any other fuel or combustor properties, or any other gas turbine system properties.

In embodiments of the present invention, a gas turbine system is controlled based at least in part on a chemical fuel induction time value. In one embodiment, the chemical fuel induction time value is generated by providing one or more ranges of characteristics, properties and operating conditions of a gas turbine and a fuel system to a control system to calculate a chemical fuel induction time transfer function. Then, during operation of the gas turbine, measured values are provided, or plugged in, to the transfer function to generate a chemical fuel induction time value. In one embodiment, the chemical fuel induction time value is used by a modeling program, such as a gas turbine control modeling program, to generate control signals to control the gas turbine. In this manner, even though combustion of a fuel lasts only a matter of milliseconds, a predictive model may be generated that takes into account a chemical fuel induction time value to control operation of the gas turbine system.

In embodiments of the invention, the fuel chemical induction time transfer function provides one transfer function that provides data related to a plurality of related transfer functions. In other words, each characteristic of a combustor or fuel system may have a transfer function identifying its influence on a combustion process. The fuel chemical induction time transfer function encompasses the information from the many separate transfer functions related to the induction time, since the induction time is affected by, and corresponds to, many different characteristics. Accordingly, embodiments of the invention include a system having an increased efficiency and improved calculation of combustion processes relative to systems relying upon many different transfer functions or systems that do not include data related to the induction time.

While the invention has been described in detail in connection with only a limited number of embodiments, it should be readily understood that the invention is not limited to such disclosed embodiments. Rather, the invention can be modified to incorporate any number of variations, alterations, substitutions or equivalent arrangements not heretofore described, but which are commensurate with the spirit and scope of the invention. Additionally, while various embodiments of the invention have been described, it is to be understood that aspects of the invention may include only some of the described embodiments. Accordingly, the invention is not to be seen as limited by the foregoing description, but is only limited by the scope of the appended claims.

## Claims

1. A method for controlling a gas turbine (130) configured to combust a fuel, the method comprising:
providing to an induction time transfer function values (208) corresponding to at least one of fuel characteristics (204) and combustor characteristics (203); and
controlling the combustor (132) of the gas turbine (130) based on a fuel induction time value resulting from the providing to the induction time transfer function (208) the values corresponding to at least one of fuel characteristics (204) and combustor characteristics (203).

2. The method of claim 1, further comprising:
receiving as inputs at least one of a range of values corresponding to pre-defined (202) fuel characteristics (204) and a range of values corresponding to pre-defined (202) combustor characteristics (203); and
generating the induction time transfer function (208) based on at least one of the range of values corresponding to pre-defined fuel characteristics (204) and the range of values corresponding to pre-defined combustor characteristics (203).

3. The method of claim 2, wherein generating the induction time transfer function (113) based on at least one of the range of values corresponding to pre-defined fuel characteristics and the range of values corresponding to pre-defined combustor characteristics, comprises:
providing the values corresponding to the at least one of fuel characteristics and combustor characteristics to a chemical computational code to generate a range of fuel induction time values; and
generating the induction time transfer function (113) based on the range of fuel induction time values.

4. The method of any of claims 1 to 3, wherein controlling the combustor (132) based on the fuel induction time value comprises generating combustor-control signals with a turbine-controlling model (218) based on the fuel induction time value.

5. The method of claim 4, wherein generating the combustor-control signals with the turbine-controlling model (218) comprises:
providing the fuel induction time value to a combustion transfer function (216) to generate at least one combustion characteristic algorithm; and
providing the at least one combustion characteristic algorithm to the turbine-controlling model (218) to generate the combustor-control signals.

6. The method of any of claims 1 to 5, wherein the values corresponding to at least one of fuel characteristics and combustor characteristics comprise at least one of a compressor discharge pressure, a compressor discharge temperature, a humidity level in the combustor, an equivalence ratio of the fuel, hydrogen (H₂) content of the fuel, an inert gas content of the fuel, and a CₓH_{y} content of the fuel, where x and y represent quantities of carbon and hydrogen, respectively.

7. A computer program comprising computer program code means adapted to perform the method of any of claims 1 to 6 when executed by a computer processor.

8. The computer program of claim 7, embodied on a computer-readable medium.

9. A gas turbine control assembly (200), comprising:
memory (112) having stored therein the computer program of claim 7 or 8; and
a processing circuit (116) configured to execute the computer program to perform the method of any of claims 1 to 6.

10. A gas turbine system (100), comprising:
a gas turbine (130) including a combustor (132) for combusting a fuel; and
a control assembly configured to control at least one of a fuel system (140) and the combustor (132) based on providing at least one of fuel characteristic values (204) and combustor characteristic values (203) to a fuel induction time transfer function (208).

11. The gas turbine system of claim 10, wherein control assembly (200) is configured to calculate the fuel induction time transfer function (208) based on pre-defined ranges of fuel characteristic values (204) and combustor characteristic values (203).

12. The gas turbine system of claim 11 wherein the control assembly (200) is configured to receive the pre-defined ranges of the fuel characteristic values (204) and the combustor characteristic values (203) from at least one of a user (120) input and an external device (122) connected to the control assembly (200).

13. The gas turbine system of any of claims 10 to 12, wherein the control assembly (200) is configured to measure fuel characteristics (204) and combustor characteristics (203) and to control at least one of the fuel system (140) and the combustor (132) based on a fuel induction time value resulting from providing at least one of measured fuel characteristic values (212) and measured combustor characteristic values (211) to the fuel induction time transfer function (208).

14. The gas turbine system of any of claims 10 to 13, wherein the control assembly (200) is configured to control at least one of the fuel system (140) and the combustor (132) based on providing a fuel induction time value generated by the fuel induction time transfer function (208) to a gas turbine control model (218), and to generate at least one of fuel system control signals and combustor control signals based on outputs generated by the gas turbine control model (218).

15. The gas turbine system of claim 14, wherein the control assembly (200) is configured to provide the fuel induction time value to at least one combustion transfer function (216), and to provide an output of the at least one combustion transfer function (216) to the gas turbine control model (218) to generate the outputs to control at least one of the fuel system (140) and the combustor (132).
